# DEMANDE DE BREVET EUROPEEN

(11) **EP 2 306 386 A1**
(43) Date de publication de la demande: **06.04.2011**
(21) Numéro de dépôt: 10181539.7
(22) Date de dépôt: 29.09.2010
(51) Int. Cl.: G06Q 10/00

(54) **Traitement de données de contact dans un terminal**

(30) Priorité: 29.09.2009 FR 0956746; 30.11.2009 FR 0958531
(71) Demandeur: France Telecom, 75015 Paris (FR)
(72) Inventeur: Le Huerou, Emmanuel M., 22700, SAINT QUAY PERROS (FR); Cauchie, Dany, 22700, PERROS GUIREC (FR); Clec'h, Armelle, 22300, LANNION (FR)
(74) Mandataire: Le Saux, Gaël

(57) **Abrégé**

L'invention concerne le traitement de données relatives à un contact d'un utilisateur d'un terminal, comprenant une étape (E10) de mémorisation desdites données dans ledit terminal sous la forme d'une pluralité de groupes de données associés respectivement à une pluralité d'informations identifiant ledit contact. Selon l'invention, un tel procédé comprend, au niveau du terminal, les étapes suivantes:
- détection (E11) de l'étape de mémorisation,
- déclenchement (E12) d'une recherche, auprès d'un module applicatif présent dans le terminal, d'informations complémentaires desdites informations de contact mémorisées,
- dans le cas où de telles informations complémentaires sont obtenues, commande (E17) de l'ajout de ces dernières aux informations de contact mémorisées, en association avec un nouveau groupe de données.

Application de l'invention à l'enrichissement du répertoire de contacts d'un terminal

## Description

### 1 DOMAINE DE L'INVENTION

Le domaine de l'invention est celui de la gestion d'un répertoire de contacts, stocké sous forme de données numériques notamment en mémoire d'un terminal.

Plus particulièrement, l'invention concerne l'enrichissement d'un tel répertoire de contacts par de nouvelles données numériques venant compléter les données de contact déjà mémorisées, ainsi que l'utilisation de ces nouvelles données.

### 2 SOLUTIONS DE L'ART ANTERIEUR

Aujourd'hui, la plupart des terminaux de communication, qu'ils soient mobiles, portables ou fixes, sont dotés d'un répertoire de contacts. Lorsque l'utilisateur ajoute les données d'un contact dans un tel répertoire, soit manuellement, soit automatiquement suite à la réception de données de contact en provenance d'un autre terminal, les données de contact sont rangées en adresses mémoires dans une mémoire dédiée du répertoire, généralement sous la forme arborescente ci-dessous :
- par catégorie de contact, par exemple catégorie de contacts personnels : "famille", "amis", catégorie de contacts professionnels, etc.,
- par contact dans chaque catégorie,
- par champ de données, dans chaque contact, par exemple le nom du contact, son numéro de téléphone de domicile, son numéro de téléphone mobile, son adresse de messagerie personnelle, etc.

Un inconvénient des répertoires du type ci-dessus réside dans le fait que les catégories de contact précitées sont généralement prédéfinies, toute nouvelle catégorie devant être créée manuellement par l'utilisateur du terminal.

Ainsi, par exemple, dans le cas où l'utilisateur d'un terminal rencontre une personne de façon fortuite ou programmée, au cours d'un événement particulier qui peut être défini par un instant donné dans le temps, par un lieu donné, par une activité donnée, etc. et que l'utilisateur souhaite ajouter les données de contact relatives à cette personne dans son répertoire, l'utilisateur aura uniquement la possibilité d'ajouter manuellement les données de contact dans la catégorie des contacts personnels, telle qu'en particulier : "amis". Supposons que l'utilisateur rencontre ladite personne rue de la Paix, à Paris, et qu'il souhaite que les données de contact de cette personne soient associées à cet événement, il doit créer manuellement dans son répertoire une nouvelle catégorie intitulée "rue de la Paix" sous laquelle figureront les données de contact de la personne rencontrée. Grâce à cette nouvelle catégorie créée, l'utilisateur pourra ainsi facilement retrouver ultérieurement les données de contact de la personne rencontrée, s'il ne se souvient plus du nom de cette dernière.

Il convient de noter que la création d'une telle nouvelle catégorie est fastidieuse pour l'utilisateur qui, en plus d'être contraint par la saisie des champs de données de contact obligatoires, tel que le nom du contact, son numéro de téléphone, etc., doit en plus réfléchir à l'intitulé de la nouvelle catégorie à ajouter, puis saisir manuellement cet intitulé dans son répertoire, ce qui rend l'utilisation du répertoire peu conviviale et finalement peu attractive.

De plus, les données de contact généralement stockées pour décrire des contacts ne permettent pas d'effectuer des recherches élaborées du type : quelles sont les personnes que j'ai rencontrées à telle occasion, quelles sont les personnes pour lesquelles j'ai un degré d'affinité fort, quelles sont les personnes qui ont un lien direct ou indirect avec tel ou tel évènement. De plus au cas où l'une de ces données de contact serait d'ores et déjà stockée dans un carnet d'adresses d'un terminal de communication du marché, il n'existe pas de mécanisme permettant à la fois :
- de saisir de nouvelles données de contact et de les organiser librement ;
- de faire vivre cette donnée de contact en fonction du changement d'état de certains paramètres.

En d'autres termes, les techniques de l'art antérieur n'offrent aucune solution d'évolutivité des données de contact associées aux contacts.

### 3 RESUME DE L'INVENTION

Un des buts de l'invention est de remédier à des inconvénients de l'état de la technique précité.

A cet effet, selon un premier aspect, la présente invention concerne un procédé de traitement de données relatives à un contact d'un utilisateur d'un terminal, comprenant une étape de mémorisation des données de contact dans le terminal sous la forme d'une pluralité de groupes de données associés respectivement à une pluralité d'informations identifiant le contact.

Un tel procédé est remarquable en ce qu'il comprend, au niveau du terminal, les étapes suivantes :
- détection de l'étape de mémorisation,
- déclenchement d'une recherche, auprès d'un module applicatif présent dans le terminal, d'informations complémentaires des informations de contact mémorisées,
- dans le cas où de telles informations complémentaires sont obtenues, commande de l'ajout de ces dernières aux informations de contact mémorisées, en association avec un nouveau groupe de données.

Une telle disposition permet avantageusement à l'utilisateur d'un terminal d'enrichir automatiquement les informations d'un contact stockées dans le répertoire de son terminal par de nouvelles informations de contact de type contextuelles. Ces dernières caractérisent la rencontre de l'utilisateur avec le contact dont les données ont été mémorisées et sont obtenues à partir d'un module applicatif interagissant avec le répertoire installé dans le terminal.

Une telle disposition permet en outre un enrichissement des informations de contact quasiment en temps réel, grâce à l'existence du couplage entre le répertoire et le module applicatif du terminal.

Avantageusement, de telles informations contextuelles sont ajoutées aussi bien en tant que catégorie de contact qu'en tant que champ de données de contact.

Dans un mode particulier de réalisation, l'étape de recherche précitée consiste à identifier, puis extraire des informations relatives à un événement temporel associé au contact dont les données ont été mémorisées.

Une telle disposition permet, grâce à une interaction spécifique entre le répertoire numérique et un applicatif du terminal, tel qu'en particulier l'applicatif agenda, calendrier ou tâches, de récupérer des informations contextuelles liées à un événement programmé dans le temps par l'utilisateur et au cours duquel ce dernier a rencontré le contact, puis d'ajouter ces informations contextuelles aux données du contact qui ont été mémorisées dans le répertoire du terminal au moment de la rencontre.

Dans un autre mode particulier de réalisation, lorsque les informations relatives à un même événement temporel sont identifiées de façon récurrente, de telles informations sont ajoutées aux informations de contact mémorisées, en tant que catégorie du contact.

Une telle disposition permet de proposer à l'utilisateur la création automatique d'une catégorie liée spécifiquement à l'événement temporel récurrent, sans intervention manuelle particulière de l'utilisateur.

Dans encore un autre mode particulier de réalisation, l'étape de recherche consiste à récupérer en temps réel des informations se rapportant à un groupe de données de contact préalablement identifié parmi les données de contact mémorisées.

Une telle disposition permet d'enrichir automatiquement les informations de contact mémorisées dans le cadre d'une rencontre de l'utilisateur avec un contact, même si cette rencontre n'avait pas été prévue dans l'applicatif agenda ou calendrier du terminal de l'utilisateur, grâce à un couplage du répertoire du terminal avec un module applicatif présent dans le terminal, qui est capable de télécharger des informations liées aux informations de contact mémorisées. Un tel module applicatif consiste par exemple en :
- un module de géolocalisation qui est apte à récupérer les points d'intérêt de l'endroit dans lequel a eu lieu la rencontre, tels que par exemple un bar, un restaurant, un musée, etc., en fonction des coordonnées du lieu de rencontre mémorisées par l'utilisateur en tant que données de contact,
- un module d'agrégation de contenus, par exemple un agrégateur de flux RSS (Abréviation anglaise de "Rich Site Summary") qui est apte à récupérer un événement d'actualité diffusé à l'instant de la rencontre, lequel instant étant considéré comme étant l'instant d'entrée des données de contact dans le terminal.

Dans encore un autre mode particulier de réalisation, le procédé comprend en outre les étapes suivantes :
- identification, parmi les informations complémentaires obtenues, d'informations relatives à un autre contact que celui dont les données ont été mémorisées,
- déclenchement de l'émission d'une requête en mémorisation, auprès du terminal, des informations relatives à l'autre contact,
- dans le cas où la requête en mémorisation est acceptée, mémorisation des informations relatives à l'autre contact dans le terminal.

Une telle disposition permet au terminal de proposer à l'utilisateur d'ajouter automatiquement dans son répertoire des données de contact relatives à d'autres personnes qui étaient présentes lors de la rencontre de l'utilisateur avec la personne dont il a ajouté les données de contact dans son répertoire.

Dans encore un autre mode particulier de réalisation du procédé selon l'invention, lorsque, au cours de l'étape d'identification, des informations relatives à un événement temporel sont également identifiées parmi les informations complémentaires et sont associées à la fois au contact dont les données ont été mémorisées et à l'autre contact, l'étape de mémorisation des informations relatives à l'autre contact consiste dans le déclenchement de l'ajout des informations d'événement temporel aux informations relatives à l'autre contact.

Une telle disposition permet ainsi à l'utilisateur de personnaliser aisément la catégorie de ses contacts par des informations contextuelles liées à un événement temporel tel que par exemple un concert, une exposition, une conférence, etc., une telle catégorie personnalisée pouvant être rattachée de manière virale (c'est-à-dire par contamination, à l'aide des autres contacts) à des contacts dont les données sont déjà mémorisées dans le répertoire du terminal ou à des contacts qui ont participé à l'événement temporel et dont les données ont été récupérées par exemple dans l'agenda du terminal.

Selon un second aspect, l'invention concerne un terminal comprenant :
- un module de traitement de données relatives à un contact d'un utilisateur d'un terminal,
- un module de mémorisation apte à enregistrer de telles données de contact sous la forme d'une pluralité de groupes de données associés respectivement à une pluralité d'informations identifiant le contact.

Un tel terminal est remarquable en ce que le module de traitement de données de contact comprend :
- des moyens de détection de l'enregistrement des informations de contact,
- des moyens de recherche, auprès d'un module applicatif présent dans le terminal, d'informations complémentaires des informations de contact enregistrées,
- des moyens d'agrégation aptes à être déclenchés dans le cas où de telles informations complémentaires sont obtenues, de façon à ajouter ces dernières aux informations de contact enregistrées, en association avec un nouveau groupe de données.

Dans un mode particulier de réalisation, le module de traitement de données de contact comprend des moyens d'identification et des moyens d'extraction d'informations relatives à un événement temporel associé au contact dont les données ont été enregistrées.

Dans un autre mode de réalisation, lorsque les informations relatives à un même événement temporel sont identifiées de façon récurrente, les moyens d'agrégation sont déclenchés de façon à ajouter aux informations de contact enregistrées, les informations d'événement temporel en tant que catégorie du contact.

Dans encore un autre mode de réalisation, le module applicatif est l'agenda du terminal.

Dans encore un autre mode de réalisation, le module de traitement de données comprend des moyens de récupération en temps réel d'informations se rapportant à un groupe de données de contact préalablement identifié parmi les données de contact enregistrées.

Dans encore un autre mode de réalisation, les moyens d'identification sont aptes à identifier en outre, parmi les informations complémentaires, des informations qui sont relatives à un événement temporel auquel sont associés à la fois le contact dont les données ont été enregistrées et un autre contact, le module d'agrégation étant alors apte à être déclenché pour ajouter les informations d'événement temporel aux informations relatives à l'autre contact.

L'invention vise également un programme d'ordinateur sur un support d'informations, ce programme comportant des instructions adaptées à la mise en oeuvre des étapes d'un procédé de traitement de données de contact tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Le terminal et le programme d'ordinateur précités présentent au moins les mêmes avantages que ceux conférés par le procédé de traitement de données de contact selon la présente invention.

L'invention porte également sur un procédé de mise à jour de données relatives à un contact d'un utilisateur d'un terminal, lesdites données ayant préalablement fait l'objet d'un traitement selon un procédé de traitement de données tel que décrit précédemment.

Selon l'invention, ledit procédé de mise à jour comprend, au niveau du terminal, les étapes suivantes :
- identification, au sein d'une base de données de règles, d'au moins une règle de mise à jour d'une donnée relative audit contact ;
- exécution de ladite règle de mise à jour de ladite donnée délivrant une valeur ;
- mise à jour de ladite donnée relative audit contact par ladite valeur ;

Ainsi, l'invention permet de faire évoluer dans le temps les données de contact associées aux différents contacts enregistrés dans le terminal.

L'invention porte également sur un dispositif de mise à jour de données relatives à un contact d'un utilisateur d'un terminal, lesdites données ayant préalablement fait l'objet d'un traitement dans un terminal tel que décrit précédemment.

Selon l'invention un tel dispositif de mise à jour comprend :
- des moyens d'identification, au sein d'une base de données de règles, d'au moins une règle de mise à jour d'une donnée relative audit contact ;
- des moyens d'exécution de ladite règle de mise à jour de ladite donnée délivrant une valeur ;
- des moyens de mise à jour de ladite donnée relative audit contact par ladite valeur.

Ainsi, l'invention propose un dispositif permettant de mettre à jour les données des contacts enregistrés dans le terminal. On note que le dispositif de mise à jour peut être intégré au terminal ou bien être situé au sein d'un réseau de communication.

### 4 LISTE DES FIGURES

D'autres caractéristiques et avantages de la présente invention ressortiront de la description faite ci-dessous, en référence aux dessins annexés qui en illustrent des exemples de réalisation dépourvus de tout caractère limitatif. Sur les figures :
- la figure 1 est une représentation schématique de l'architecture d'un terminal conforme à l'invention;
- la figure 2 représente le classement des données de contact dans le terminal de la figure 1, selon un mode de réalisation de l'invention;
- la figure 3 est une représentation schématique fonctionnelle du module de traitement de données de contact du terminal de la figure 1, selon un mode de réalisation de l'invention;
- la figure 4A représente les différentes étapes d'exécution, dans le terminal des figures 1 à 3, d'un premier type de traitement de données de contact ;
- la figure 4B représente une variante d'exécution du procédé de traitement de données de contact de la figure 4A;
- la figure 4C représente une autre variante d'exécution du procédé de traitement de données de contact de la figure 4A;
- la figure 5 représente les différentes étapes d'exécution, dans le terminal des figures 1 à 3, d'un second type de traitement de données de contact ;
- la figure 6 représente les différentes étapes d'exécution, dans le terminal des figures 1 à 3, d'un troisième type de traitement de données de contact ;
- La figure 7 représente les différentes étapes d'exécution, dans le terminal des figures 1 à 3, d'un quatrième type de traitement de données de contact ;
- La figure 8 représente les différentes étapes d'exécution d'une mise à jour des données de contact du terminal.

### 5 DESCRIPTION DETAILLEE DE L'INVENTION

### 5.1 Rappel du principe de l'invention

D'une manière générale, l'invention concerne d'une part l'obtention, de la manière la plus automatisée qui soit, de données de contact complémentaires sur les contacts qui sont enregistrés et d'autre part la mise à jour de ces données de contact, comme par exemple l'affinité de l'utilisateur avec ses contacts. Bien que l'invention soit d'une manière générale décrite en relation avec un terminal, il est bien entendu qu'elle peut également être mise en oeuvre par l'intermédiaire d'un réseau de communication qui hébergerait, au sein d'un ou plusieurs serveurs, les données relatives aux contacts des utilisateurs.

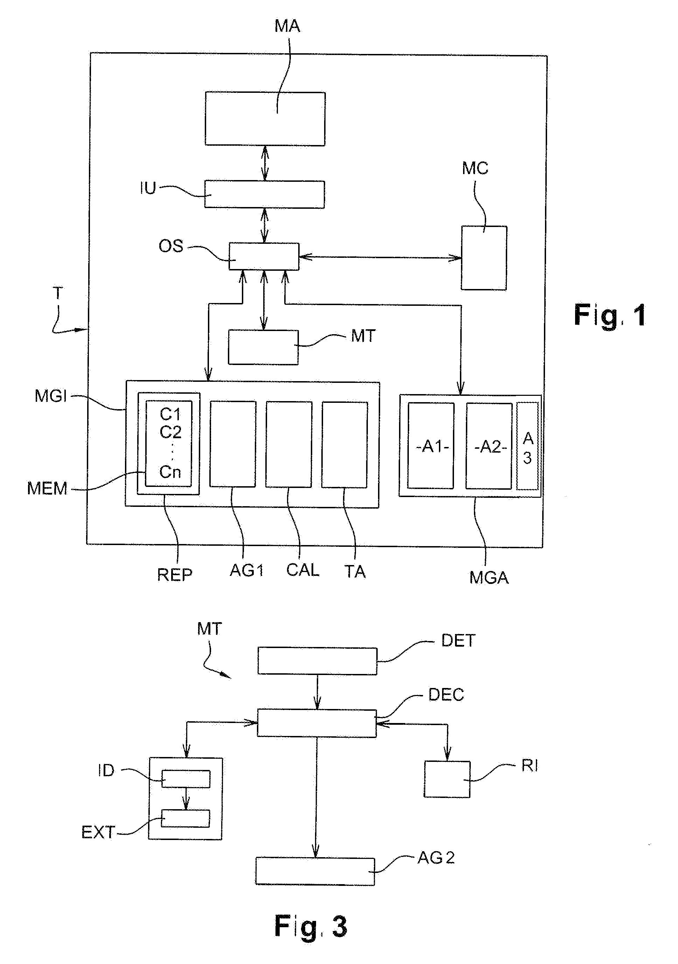

On va maintenant décrire, en référence à la figure 1, les principaux éléments composant l'architecture du terminal selon l'invention.

De façon connue en tant que telle, le terminal selon l'invention, désigné par la référence T sur la figure 1, comprend :
- un module d'affichage MA, tel qu'un écran,
- une interface utilisateur IU apte à permettre l'affichage de données sur l'écran MA et la navigation parmi ces données affichées afin qu'un utilisateur du terminal puisse sélectionner certaines d'entre elles,
- un module MC de communication pour permettre au terminal T de communiquer, via un réseau de communication, avec d'autres terminaux ou des équipements installés dans le réseau,
- un module MGI de gestion d'informations personnelles,
- un module MGA de gestion d'une pluralité de modules applicatifs installés dans le terminal T.

Dans l'exemple représenté, le terminal T est un téléphone mobile.

Dans d'autres modes de réalisation, le terminal T pourrait être également un téléphone fixe ou bien encore un ordinateur fixe ou portable ou encore un téléviseur.

L'interface utilisateur IU est d'un type classique, en ce sens qu'elle comprend par exemple un clavier doté de touches physiques ou tactiles.

Le module MGI de gestion d'informations personnelles précité est également d'un type classique et comprend en particulier :
- un module répertoire REP apte à enregistrer dans une mémoire MEM l'ensemble des contacts C1, C2,..., Cn de l'utilisateur du terminal T,
- un module applicatif agenda AG1,
- un module applicatif calendrier CAL,
- un module applicatif de gestion de tâches TA.

Dans l'exemple représenté, le module de gestion d'applications MGA comprend par exemple deux modules applicatifs A1 et A2, le module A1 étant par exemple un module de géolocalisation du terminal T et le module A2 étant par exemple un module d'agrégation de contenus, de type flux d'informations RSS.

Le module de géolocalisation A1 est en particulier apte à récupérer, via le module de communication MC, les points d'intérêt de l'endroit dans lequel a eu lieu la rencontre entre l'utilisateur et un contact dont il enregistre les données, en fonction des coordonnées de la position géographique du terminal T qui sont enregistrées automatiquement dans le répertoire REP lorsque l'utilisateur enregistre lesdites données de contact.

De tels points d'intérêt sont par exemple le nom d'une rue, d'un bar, d'un restaurant, d'un musée, etc. où a eu lieu la rencontre au cours de laquelle l'utilisateur a enregistré les données de contact dans son répertoire REP.

Le module d'agrégation de contenus A2 est quant à lui apte à récupérer, via le module de communication COM, un événement d'actualité diffusé à l'instant de la rencontre, lequel instant étant considéré comme l'instant d'entrée des données de contact dans le terminal.

Le terminal T comprend en outre un système d'exploitation désigné par la référence OS sur la figure 1 auquel tous les modules précités du terminal sont reliés et qui est destiné à en commander le fonctionnement. Le système d'exploitation OS est par exemple de type Linux, Windows mobile, ou autres.

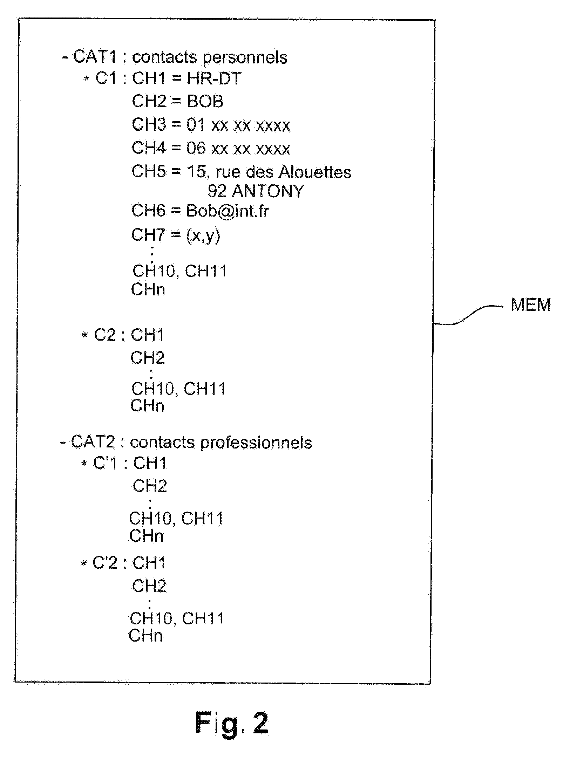

On va maintenant décrire, en référence à la figure 2, un exemple de classement des données de contact dans la mémoire MEM du répertoire REP.

De telles données de contact sont classées par exemple en adresses mémoires dans la mémoire MEM qui est à cet effet de type adressable en écriture et en lecture.

Les données de contact sont d'abord classées par catégories de contact CAT1 (catégorie des contacts personnels C1, C2, etc.), CAT2 (catégorie des contacts professionnels C'1, C'2, etc.), et dans chaque catégorie, par contact C1, C2, etc., et dans chaque contact, par champ de données CH1, CH2, etc.

Une liste des champs de données est mentionnée ci-dessous à titre d'exemple :
- CH1 : instant d'entrée des données d'un contact dans le terminal (entrée manuelle ou entrée suite à la réception des données de contact via un réseau de communication), le signe HR-DT de la figure 2 signifiant qu'il est possible de renseigner ici à la fois l'heure et la date d'entrée des données de contact,
- CH2 : nom complet du contact,
- CH3 : numéro de téléphone personnel fixe du contact,
- CH4 : numéro de téléphone mobile du contact,
- CH5 : adresse physique personnelle du contact
- CH6 : adresse de messagerie personnelle du contact,
- CH7 : coordonnées (x,y) de la position géographique du terminal T détectée par le module de géolocalisation A1,
- ...
- CH10: affinité du contact, qui représente l'affinité du contact avec l'utilisateur. La donnée incluse dans ce champ varie dans le temps et est représentative du degré d'affinité de l'utilisateur avec le contact ;
- CH11 : représentations visuelles du contact. Ce champ contient, selon l'invention, la ou les représentations visuelles du contact.

Il existe bien entendu de nombreux autres champs de données possibles. On peut notamment citer les URL d'accès aux pages des réseaux sociaux auprès desquels le contact est inscrit, les adresses de messageries instantanées du contact, etc.

Conformément à l'invention, le terminal T comprend en outre un module de traitement MT de données de contact qui se présente sous la forme d'un module logiciel stocké dans une mémoire morte (non représentée) du terminal T. Un tel module logiciel est par exemple écrit en langage C++. Selon l'invention, le module de traitement MT est apte à faire interagir le répertoire REP avec l'un des modules applicatifs AG1, CAL, TA, A1, A2 présent dans le terminal T.

On va maintenant décrire, en référence à la figure 3, l'architecture fonctionnelle du module de traitement MT de données de contact.

Le module logiciel de traitement MT de données de contact représenté comprend :
- un sous-module DET de détection de l'enregistrement de données de contact dans la mémoire MEM,
- un sous-module DEC de déclenchement d'une recherche, auprès d'un desdits modules applicatifs AG1, CAL, TA, A1, A2 présents dans le terminal, de façon à obtenir des informations complémentaires des informations de contact préalablement enregistrées,
- un sous-module d'agrégation AG2 apte à être déclenché dans le cas où de telles informations complémentaires sont obtenues, de façon à ajouter ces dernières auxdites informations de contact préalablement enregistrées, à une nouvelle adresse mémoire du répertoire REP.

Dans l'exemple représenté, le module applicatif auprès duquel s'adresse le module de déclenchement de recherche DEC, peut être aussi bien l'un des modules agenda AG1, calendrier CAL ou tâches TA de la figure 1, que le module de géolocalisation A1 ou le module d'agrégation de contenus A2. Le déclenchement de l'un ou l'autre de ces modules dépend des champs de données de contact CH1, CH2,... , CHn qui ont été enregistrés et du contexte dans lequel a lieu la rencontre entre l'utilisateur du terminal T et le contact dont les données ont été enregistrées dans la mémoire MEM lors de la rencontre.

Dans le cas où la recherche d'informations de contact complémentaires est effectuée auprès du module agenda AG1, du module calendrier CAL ou du module tâches TA, le sous-module de déclenchement de recherche est associé à :
- un sous-module d'identification ID apte à identifier, dans l'un desdits modules AG1, CAL ou TA, un événement temporel préalablement inscrit par l'utilisateur du terminal T, tel que par exemple un rendez-vous, une conférence, une exposition, etc. au cours duquel ou de laquelle l'utilisateur a rencontré le contact dont les données ont été enregistrées lors de la rencontre dans la mémoire MEM du répertoire REP,
- un sous-module d'extraction EXT apte à extraire les informations identifiant cet événement temporel.

Dans l'exemple représenté, le sous-module d'identification ID consiste en un analyseur sémantique qui est apte à détecter l'intitulé du rendez-vous, de la conférence, de l'exposition, etc.

Dans le cas où la recherche d'informations de contact complémentaires est effectuée auprès du module de géolocalisation A1 ou du module d'agrégation de contenus A2, le sous-module de déclenchement de recherche DEC est associé simplement à un sous-module RI de récupération des informations recueillies par le module de géolocalisation A1 ou par le module d'agrégation de contenus A2 ou d'un autre module d'obtention de données.

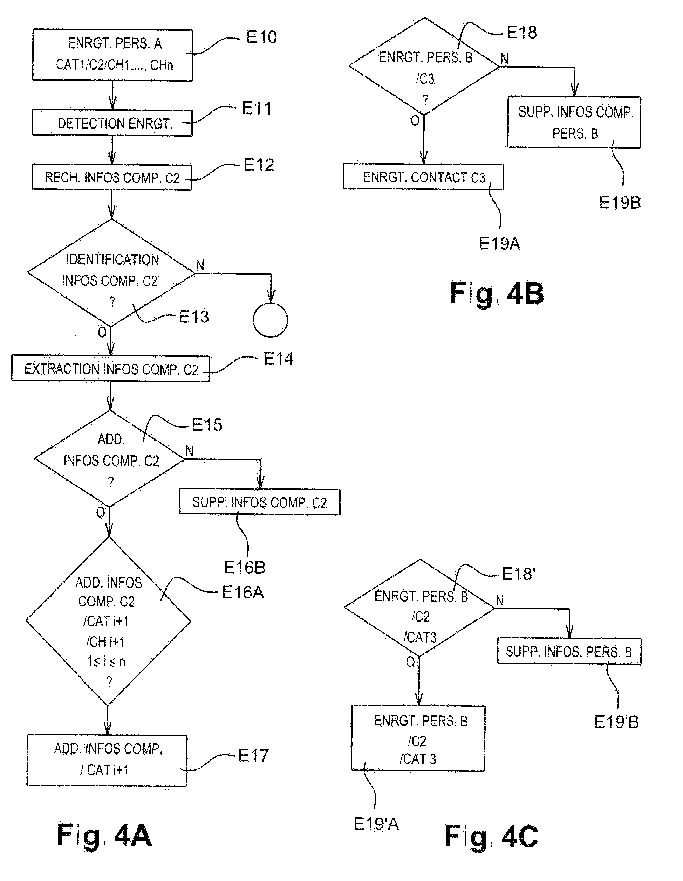

En référence maintenant à la figure 4A, on va décrire l'exécution, dans le téléphone mobile T, d'un premier type de traitement de données de contact, en fonction d'un premier contexte de rencontre entre l'utilisateur du terminal T et le contact rencontré.

On suppose au préalable que l'utilisateur du terminal T a inscrit dans son agenda AG1 un événement temporel intitulé par exemple "cours de théâtre" et programmé le 19 septembre, de 14h à 16h.

Au cours de cet événement, l'utilisateur du terminal T rencontre une personne A et décide d'enregistrer, au cours d'une étape E10, les coordonnées de cette personne A dans son répertoire REP.

A cet effet, les données de contact relatives à la personne A sont classées par exemple dans la catégorie CAT1 précitée, en tant que par exemple contact C2, en association avec tout ou partie des champs précités CH1 à CHn.

Au cours d'une étape E11, le sous-module de détection DET détecte l'enregistrement de ces données de contact, et en particulier les données HR-DT du champ CH1.

Au cours d'une étape E12, le sous-module DEC déclenche une recherche d'informations complémentaires des informations de contact relatives à la personne A venant d'être enregistrées, auprès d'un des modules agenda AG1, calendrier CAL ou tâches TA du module de gestion d'informations personnelles MGI, par exemple auprès du module agenda AG1.

Au cours d'une étape E13, le sous-module d'identification ID effectue une analyse sémantique de l'agenda AG de façon à vérifier si les données HR-DT du champ CH1 sont contenues dans la plage horaire 14h à 16h telle qu'indiquée dans l'agenda AG1 et, si c'est le cas, identifier l'intitulé de l'événement temporel "cours de théâtre".

Dans le cas où les données HR-DT du champ CH1 sont bien contenues dans la plage horaire indiquée dans l'agenda AG1, au cours d'une étape E14, le sous-module d'extraction EXT extrait l'intitulé "cours de théâtre" et stocke temporairement ce dernier dans une mémoire non représentée du terminal T.

Au cours d'une étape E15, le module MT de traitement de données de contact envoie une requête à l'utilisateur du terminal T qui se présente sous la forme d'un message qui s'affiche sur l'écran MA (figure 1) du terminal. Un tel message est par exemple du type : "souhaitez vous ajouter l'information 'cours de théâtre' au contact C2?" avec la possibilité, pour l'utilisateur, de répondre par oui ou par non.

Dans le cas où l'utilisateur est d'accord pour effectuer l'ajout, ce dernier appuie sur une touche "oui" dédiée de l'interface utilisateur IU.

Au cours d'une étape E16A, le module MT de traitement de données de contact envoie un nouveau message sur l'écran MA du terminal T. Un tel nouveau message est par exemple du type : « en tant que nouveau champ de données du contact C2, appuyez sur la touche "1"; en tant que nouvelle catégorie du contact C2, appuyez sur la touche "2" ».

Si par exemple, l'utilisateur appuie sur la touche "2" via l'interface utilisateur IU, au cours d'une étape E17, le module d'agrégation AG2 ajoute l'intitulé "cours de théâtre" en tant que nouvelle catégorie du contact C2, par exemple CAT3, à laquelle est maintenant associé le contact C2 identifiant la personne A, de même que les champs de données CH1 à CHn associés au contact C2.

Dans le cas où l'utilisateur n'est pas d'accord pour effectuer l'ajout, ce dernier appuie sur une touche "non" dédiée de l'interface utilisateur IU.

Au cours d'une étape E16B, le module MT de traitement de données de contact efface alors l'intitulé "cours de théâtre" qui avait été stocké temporairement à l'étape E14 précitée.

Selon une première variante de réalisation du procédé de traitement de données de contact décrit ci-dessus, dans le cas où, à l'étape E13 précitée, le sous-module d'identification ID identifie que l'intitulé de l'événement temporel "cours de théâtre" figure de façon récurrente dans l'agenda AG1, (par exemple deux fois par semaine ou une fois par mois, etc.), le module MT de traitement de données de contact envoie un seul message sur l'écran MA du terminal T. Un tel message est par exemple du type : « souhaitez vous ajouter l'information "cours de théâtre" en tant que catégorie du contact C2? » avec comme précédemment la possibilité, pour l'utilisateur, de répondre par oui ou par non.

Selon une seconde variante de réalisation du procédé de traitement de données de contact décrit ci-dessus, à l'étape E13 précitée, le sous-module d'identification ID identifie en outre par analyse sémantique le nom d'une personne B ayant vocation à participer à l'événement "cours de théâtre". Une telle identification est rendue possible par le fait, par exemple, que le nom de la personne B figure dans une invitation que le professeur du cours de théâtre a envoyée préalablement par messagerie électronique à tous les participants au cours de théâtre et que l'utilisateur a insérée dans son module agenda AG2.

Au cours de l'étape E14 précitée, le sous-module d'extraction EXT extrait alors en plus de l'intitulé "cours de théâtre" le nom de la personne B et stocke ce nom temporairement avec l'intitulé "cours de théâtre".

Le procédé de traitement de données de contact comprend alors les étapes supplémentaires décrites en référence à la figure 4B.

Au cours d'une étape E18, le module MT de traitement de données de contact envoie une requête à l'utilisateur du terminal T qui se présente sous la forme d'un message qui s'affiche sur l'écran MA (figure 1) du terminal. Un tel message est par exemple du type : "souhaitez vous enregistrer la personne B en tant que contact C3?" avec la possibilité, pour l'utilisateur, de répondre par oui ou par non.

Dans le cas où l'utilisateur est d'accord pour effectuer un tel enregistrement, ce dernier appuie sur la touche "oui" de l'interface utilisateur IU.

Au cours d'une étape E19A, les données de la personne B sont enregistrées en tant que nouveau contact C3, dans le répertoire REP.

Dans le cas où l'utilisateur n'est pas d'accord pour effectuer l'enregistrement des données de contact relatives à la personne B, l'utilisateur appuie sur la touche "non" de l'interface utilisateur IU.

Au cours d'une étape E19B, le module MT de traitement de données de contact efface le nom de la personne B qui avait été stocké temporairement à l'étape E14.

Selon une variante du procédé de traitement de données de contact représenté à la figure 4B, dans le cas où, à l'étape E13 précitée, le sous-module d'identification ID identifie que l'événement "cours de théâtre" est associé à la fois à la personne A, dont les données de contact ont été mémorisées dans la catégorie CAT3 intitulée "cours de théâtre", et à la personne B, l'étape E18 est modifiée en l'étape E18' représentée à la figure 4C.

Au cours de l'étape E18', le module MT de traitement de données de contact envoie un message à l'utilisateur du terminal T qui est par exemple du type : « souhaitez vous enregistrer la personne B en tant que contact C2 dans la catégorie CAT3 : "cours de théâtre?" », avec toujours la possibilité, pour l'utilisateur, de répondre par oui ou par non.

Dans le cas où l'utilisateur est d'accord pour effectuer un tel enregistrement, ce dernier appuie sur la touche "oui" de l'interface utilisateur IU.

Au cours d'une étape E19'A, les données de la personne B sont enregistrées dans le répertoire REP, dans la catégorie CAT3, en tant que nouveau contact C2.

Dans le cas où l'utilisateur n'est pas d'accord pour effectuer l'enregistrement des données de contact relatives à la personne B, l'utilisateur appuie sur la touche "non" de l'interface utilisateur IU.

Au cours d'une étape E19'B, le module MT de traitement de données de contact efface le nom de la personne B qui avait été stocké temporairement à l'étape E14.

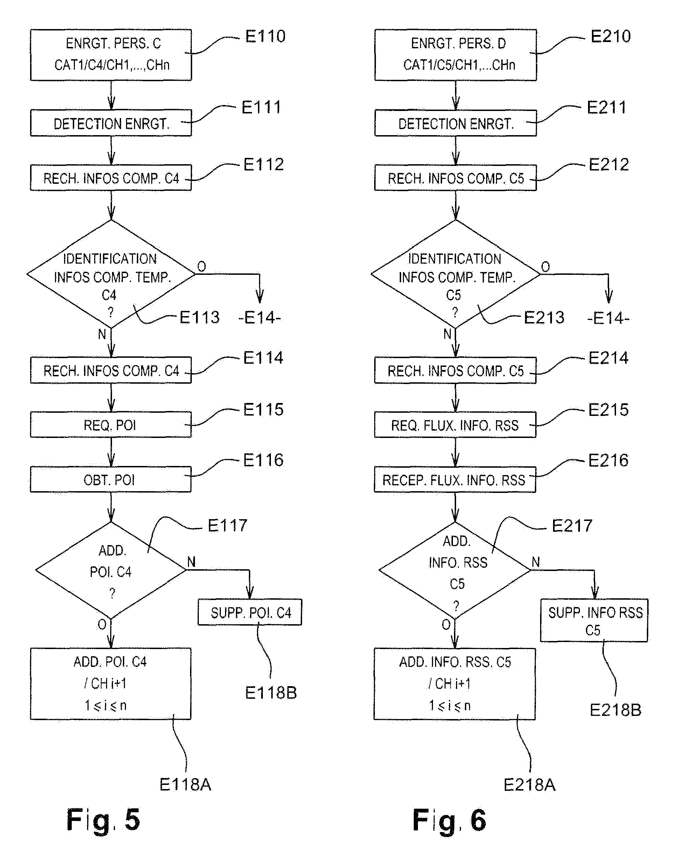

En référence maintenant à la figure 5, on va décrire l'exécution, dans le téléphone mobile T, d'un second type de traitement de données de contact, en fonction d'un second contexte de rencontre entre l'utilisateur du terminal T et le contact rencontré.

On suppose dans cet exemple que l'utilisateur du terminal T n'a planifié aucun événement temporel particulier dans le module agenda AG1, calendrier CAL ou tâches TA de son terminal T.

On suppose dans cet exemple que l'utilisateur du terminal T rencontre fortuitement une personne C, dans un lieu déterminé, par exemple un bar, dont le nom est par exemple "La chope". Au cours de cette rencontre, l'utilisateur du terminal T décide d'enregistrer, au cours d'une étape E110, les coordonnées de cette personne C dans son répertoire REP.

A cet effet, les données de contact relatives à la personne C sont classées par exemple dans la catégorie CAT1 précitée, en tant que par exemple contact C4, en association avec tout ou partie des champs précités CH1 à CHn.

Au cours d'une étape E111, le sous-module de détection DET détecte l'enregistrement de ces données de contact, et en particulier les données HR-DT du champ CH1.

Au cours d'une étape E112, le sous-module DEC déclenche une recherche d'informations complémentaires des informations de contact relatives à la personne C venant d'être enregistrées, auprès d'un des modules agenda AG1, calendrier CAL ou tâches TA du module de gestion d'informations personnelles MGI, par exemple auprès du module agenda AG1.

Au cours d'une étape E113, le sous-module d'identification ID effectue une analyse sémantique de l'agenda AG1 de façon à vérifier si les données HR-DT du champ CH1 sont contenues dans une plage horaire indiquée dans l'agenda AG1.

Si c'est le cas, le procédé de traitement de données de contact repasse à l'étape E14 précitée et se déroule conformément au procédé décrit en référence aux figures 4A à 4C.

Si ce n'est pas le cas, comme supposé dans l'exemple représenté, au cours d'une étape E114, le sous-module DEC déclenche une recherche d'informations complémentaires des informations de contact relatives à la personne C venant d'être enregistrées, auprès d'un des modules applicatifs A1 ou A2, par exemple auprès du module de géolocalisation A1.

Au cours d'une étape E115, le module de géolocalisation A1 envoie, à destination d'un serveur distant (non représenté), une requête en obtention de points d'intérêt, via le module de communication COM (figure 1), ladite requête contenant les coordonnées de la position géographique du terminal T qui ont été enregistrées, au cours de l'étape E110 précitée, dans le champ CH7, en correspondance avec le contact C4.

Au cours d'une étape E116, le sous-module RI (figure 3) du module MT de traitement de données de contact récupère au moins un point d'intérêt reçu par le module de géolocalisation A1, qui est, dans l'exemple représenté, le bar "La chope", puis stocke temporairement ce point d'intérêt dans une mémoire non représentée du terminal T.

Au cours d'une étape E117, le module MT de traitement de données de contact envoie une requête à l'utilisateur du terminal T sous la forme d'un message qui s'affiche sur l'écran MA (figure 1) du terminal. Un tel message est par exemple du type : « souhaitez vous ajouter l'information " bar : La chope " au contact C4? », avec la possibilité, pour l'utilisateur, de répondre par oui ou par non.

Dans le cas où l'utilisateur est d'accord pour effectuer l'ajout, ce dernier appuie sur la touche "oui" de l'interface utilisateur IU.

Au cours d'une étape 118A, le module d'agrégation AG2 ajoute le point d'intérêt " bar : La chope " en tant que nouveau champ de données CH8 du contact C4 identifiant la personne C.

Dans le cas où l'utilisateur n'est pas d'accord pour effectuer l'ajout, ce dernier appuie sur la touche "non" de l'interface utilisateur IU.

Au cours d'une étape E118B, le module MT de traitement de données de contact efface alors le point d'intérêt " bar : La chope " qui avait été stocké temporairement à l'étape E116.

D'une façon similaire à ce qui a été décrit plus haut en référence à la figure 4A, un tel point d'intérêt peut, en variante, être enregistré en tant que nouvelle catégorie de contact, plutôt qu'en tant que simple champ de données de contact.

En référence maintenant à la figure 6, on va décrire l'exécution, dans le téléphone mobile T, d'un troisième type de traitement de données de contact, en fonction d'un troisième contexte de rencontre entre l'utilisateur du terminal T et le contact rencontré.

On suppose dans cet exemple que l'utilisateur du terminal T n'a planifié aucun événement temporel particulier dans le module agenda AG1, calendrier CAL ou tâches TA de son terminal T.

On suppose par ailleurs dans cet exemple que l'utilisateur du terminal T rencontre fortuitement une personne D, dans un lieu déterminé, par exemple une rue, dont le nom est par exemple "avenue des Champs Elysées". Au cours de cette rencontre, l'utilisateur du terminal T décide d'enregistrer, au cours d'une étape E210, les coordonnées de cette personne D dans son répertoire REP.

A cet effet, les données de contact relatives à la personne D sont classées par exemple dans la catégorie CAT1 précitée, en tant que par exemple contact C5, en association avec tout ou partie des champs précités CH1 à CHn.

Au cours d'une étape E211, le sous-module de détection DET détecte l'enregistrement de ces données de contact, et en particulier les données HR-DT du champ CH1.

Au cours d'une étape E212, le sous-module DEC déclenche une recherche d'informations complémentaires des informations de contact relatives à la personne D venant d'être enregistrées, auprès d'un des modules agenda AG1, calendrier CAL ou tâches TA du module de gestion d'informations personnelles MGI, par exemple auprès du module agenda AG1.

Au cours d'une étape E213, le sous-module d'identification ID effectue une analyse sémantique de l'agenda AG de façon à vérifier si les données HR-DT du champ CH1 sont contenues dans une plage horaire indiquée dans l'agenda AG1.

Si c'est le cas, le procédé de traitement de données de contact repasse à l'étape E14 précitée et se déroule conformément au procédé décrit en référence aux figures 4A à 4C.

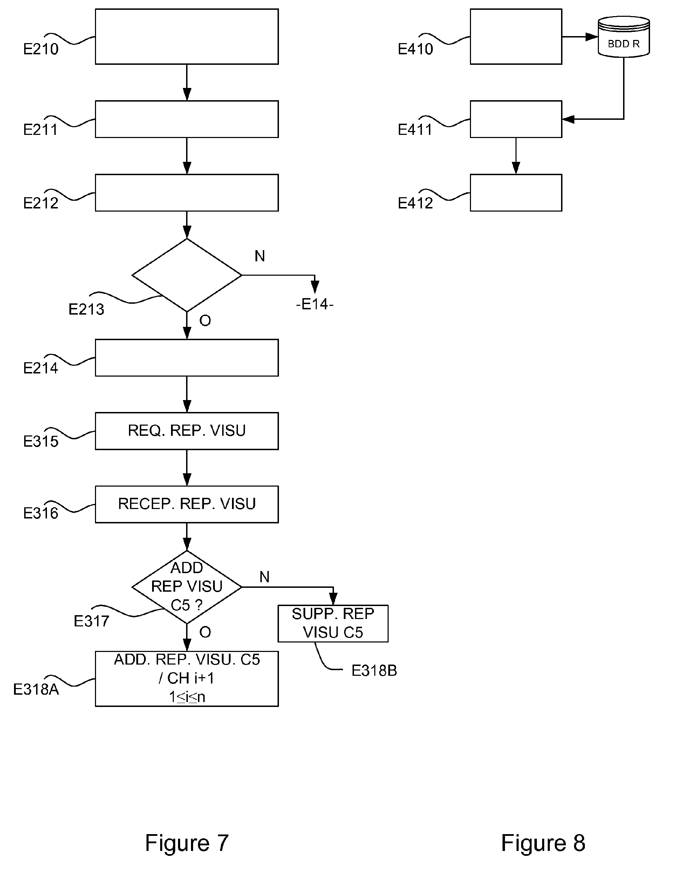

Si ce n'est pas le cas, comme supposé dans l'exemple représenté, au cours d'une étape E214, le sous-module DEC déclenche une recherche d'informations complémentaires des informations de contact relatives à la personne D venant d'être enregistrées, auprès d'un des modules applicatifs A1 ou A2 du module de gestion, par exemple auprès du module A2 d'agrégation de flux d'informations RSS. Le sous module DEC peut également déclencher une recherche d'informations complémentaires des informations de contact relatives à la personne D venant d'être enregistrées, auprès d'un module applicatifs A3 décrit par la suite en relation avec la figure 7.

Au cours d'une étape E215, le module d'agrégation de flux RSS envoie, à destination d'un serveur distant de diffusion d'informations (non représenté), une requête en réception de flux RSS, via le module de communication COM (figure 1), ladite requête contenant la date et l'heure qui ont été enregistrées, au cours de l'étape E210 précitée, dans le champ CH1 en correspondance avec le contact C5.

Au cours d'une étape E216, le sous-module RI (figure 3) du module MT de traitement de données de contact récupère un extrait du flux d'informations RSS ayant été diffusé à la date et à l'heure indiquées dans la requête. Il s'agit par exemple d'une information qui relate le déroulement du défilé militaire du 14 juillet. A cet effet, le sous-module RI récupère, en provenance du module A2 d'agrégation de flux RSS, par exemple le titre de l'information diffusée, qui est, dans l'exemple représenté, " Défilé du 14 juillet ", puis stocke temporairement ce titre dans une mémoire non représentée du terminal T.

Au cours d'une étape E217, le module MT de traitement de données de contact envoie une requête à l'utilisateur du terminal T sous la forme d'un message qui s'affiche sur l'écran MA (figure 1) du terminal. Un tel message est par exemple du type : « souhaitez vous ajouter l'information " Défilé du 14 juillet " au contact C5? », avec la possibilité, pour l'utilisateur, de répondre par oui ou par non.

Dans le cas où l'utilisateur est d'accord pour effectuer l'ajout, ce dernier appuie sur la touche "oui" de l'interface utilisateur IU.

Au cours d'une étape 218A, le module d'agrégation AG2 ajoute le titre de l'information " Défile du 14 juillet " en tant que nouveau champ de données CH9 du contact C5 identifiant la personne D.

Dans le cas où l'utilisateur n'est pas d'accord pour effectuer l'ajout, ce dernier appuie sur la touche "non" de l'interface utilisateur IU.

Au cours d'une étape E218B, le module MT de traitement de données de contact efface alors le titre "Défilé du 14 juillet" qui avait été stocké temporairement à l'étape E216.

D'une façon similaire à ce qui a été décrit plus haut en référence à la figure 4A, un tel extrait d'informations RSS peut, en variante, être enregistré en tant que nouvelle catégorie de contact, plutôt qu'en tant que simple champ de données de contact.

Dans un exemple non représenté, le module de gestion d'applications MGA comprend en outre un module de collecte d'images associées aux contacts A3. Classiquement, les contacts enregistrés dans un terminal peuvent être associés à une photographie, une image ou encore une vidéo. Outre le fait que ce type de représentations visuelles n'est pas forcément aisé à saisir pour un contact, il n'est généralement possible de définir qu'une seule donnée visuelle par contact. L'invention propose d'associer d'autres représentations aux contacts de l'utilisateur, par exemple par l'intermédiaire du champ de donnée CH11 préalablement décrit.

On décrit le processus de collecte en relation avec la figure 7. Les étapes communes avec le procédé décrit en figure 6 ont conservé leurs numérotations initiales. Au cours d'une étape E315, le module de collecte A3 envoie, à destination d'un serveur distant de recherche d'informations (non représenté), une requête en réception d'une représentation visuelle du contact, via le module de communication COM (figure 1), ladite requête contenant la date et l'heure qui ont été enregistrées, au cours de l'étape E210 précitée, dans le champ CH2 ou CH6 en correspondance avec le contact C5. Le module A3 récupère également les photographies ou les représentations visuelles locales qui ont été enregistrées lors de la création du contact dans le répertoire du terminal. Pour ce faire, le terminal se base sur la date et l'heure qui ont été enregistrées, au cours de l'étape E210 précitée, dans le champ CH1 en correspondance avec le contact C5.

Au cours d'une étape E316, le sous-module RI (figure 3) du module MT de traitement de données de contact récupère une ou plusieurs représentations visuelles associées aux données des champs CH2 ou CH6. Il s'agit par exemple d'une miniature d'une photo, d'une image ou d'une URL permettant d'accéder à une telle photo ou une telle image. A cet effet, le sous-module RI récupère, en provenance du module A3 de collecte de représentation visuelle, par exemple une miniature de l'image récupérée, puis stocke temporairement cette miniature dans une mémoire non représentée du terminal T.

Au cours d'une étape E317, le module MT de traitement de données de contact envoie une requête à l'utilisateur du terminal T sous la forme d'un message qui s'affiche sur l'écran MA (figure 1) du terminal. Un tel message est par exemple du type : « souhaitez vous ajouter l'image au contact C5? », avec la possibilité, pour l'utilisateur, de répondre par oui ou par non.

Dans le cas où l'utilisateur est d'accord pour effectuer l'ajout, ce dernier appuie sur la touche "oui" de l'interface utilisateur IU.

Au cours d'une étape E318A, le module de traitement MT ajoute l'image du contact en tant que nouvelle donnée de contact dans le champ de données CH11 du contact C5 identifiant la personne D.

Dans le cas où l'utilisateur n'est pas d'accord pour effectuer l'ajout, ce dernier appuie sur la touche "non" de l'interface utilisateur IU.

Au cours d'une étape E318B, le module MT de traitement de données de contact efface alors l'image qui avait été stocké temporairement à l'étape E216.

Si plusieurs représentations visuelles de l'utilisateur ont été récupérées par l'intermédiaire du module de collecte A3, alors les étapes précédentes sont répétées pour toutes les représentations visuelles récupérées.

Les différents procédés de traitement de données de contact qui viennent d'être décrits ci-dessus permettent ainsi à l'utilisateur d'enrichir son répertoire de contacts, de façon automatique et personnalisée, par de nouvelles informations qui sont destinées à lui servir d'aide mémoire, lorsque, ultérieurement, l'utilisateur souhaitera contacter une des personnes A, B, C ou D et qu'il aura oublié le nom de ces personnes. Il est en effet généralement plus aisé pour un utilisateur de se souvenir d'un événement particulier au cours duquel il était présent, que d'un simple nom.

### 5.2 Mise à jour des données de contact

Dans au moins un mode de réalisation de l'invention, le terminal est également muni de moyens permettant de mettre à jour des données de contact, c'est-à-dire soit des catégories associées aux contacts (CAT1, ..., CATn), soit des données de contact en tant que telles, enregistrées dans les champs de contact (CH1, ..., CHn). En effet, comme dans la vie réelle, les données de contact sont sujettes à des évolutions. Il est en effet tout à fait classique qu'un utilisateur perde de vue certains contacts de son carnet d'adresse. Or les solutions de l'art antérieur ne permettent pas de tenir compte de cette dissension ou au contraire d'un affermissement des liens unissant l'utilisateur et ses contacts au cours du temps. Pour prendre en compte de telles situations, les inventeurs ont eu l'idée de permettre une évolutivité des données de contact. Ainsi, au fil du temps, les données de contact sont mises à jour en fonction de ce qu'il s'est passé depuis la rencontre initiale entre l'utilisateur et le contact (c'est-à-dire depuis l'enregistrement du contact dans le terminal).

Ces mises à jours des données de contact sont réalisées à l'aide de modules de mise à jour spécifiques. Ces modules de mise à jour sont soit intégrés au sein du terminal soit mis en oeuvre par l'intermédiaire du réseau de communication. Lorsqu'ils sont intégrés au niveau du terminal, les modules de mise à jour spécifiques mettent en oeuvre des règles de mise à jour qui sont disponibles au sein d'une base de données de règles intégrée au terminal de communication. Lorsqu'ils sont mis en oeuvre par l'intermédiaire d'un réseau de communication, les modules de mise à jour spécifiques mettent en oeuvre des règles de mise à jour qui sont disponibles au sein d'une base de données de règles également mise en oeuvre au niveau du réseau de communication.

Ainsi, dans ce mode de réalisation de l'invention, on dispense deux nouveaux modules : un module d'évolutivité des données de contact MED qui met en oeuvre des règles d'évolutivité des données de contact et un module de gestion des degrés d'utilisation et des degrés de d'affinité MGD qui utilise également des règles. Ces deux modules ne sont pas représentés sur les figures

Ces deux modules utilisent les règles de mise à jour qui sont définies au sein de la base de données de règles. Ces deux modules utilisent un moteur de règles dont l'objet est d'exécuter les règles de mise à jour qui sont contenues dans la base de données des règles. Les règles de mise à jour permettent d'agir sur des données de contact des contacts enregistrés au sein du terminal de l'utilisateur. En d'autres termes, les règles de la base de règles sont utilisées pour faire évoluer les données de contact. Ainsi, l'évolution des données de contact peut être grandement facilitée. En effet, il n'est plus nécessaire, pour l'utilisateur, de modifier manuellement ses données de contact pour faire en sorte que celles-ci correspondent par exemple aux degrés d'affinité qu'il entretient avec ses contacts.

L'évolution automatisée des données de contact à l'aide des règles de mise à jour libère donc l'utilisateur d'une tâche de modification et de classement fastidieuse et peu intéressante.

Plus particulièrement, l'exécution des règles de mise à jour par les modules permet de faire varier certaines des données de contact associées aux contacts de l'utilisateur. Ainsi, un contact comprendra par exemple une donnée de contact appelée « Affinité » (CH10), dont la valeur pourra être mise à jour par l'intermédiaire d'une ou plusieurs règles de la base de règles.

La mise à jour des données de contact est réalisée de la manière suivante, décrite en relation avec la figure 8 :
- Identification (E410), au sein d'une base de données de règles (BDD R), d'une règle de mise à jour de la donnée relative audit contact ;
- exécution (E411) de la règle de mise à jour de ladite donnée délivrant une valeur (c'est la nouvelle valeur de la donnée après l'exécution de la règle) ;
- mise à jour (E412) de la donnée relative au contact par la valeur ;

Cette mise à jour peut consister, par exemple dans le cas des images, à l'adjonction de la nouvelle valeur à côté des valeurs précédentes. La règle de mise à jour des données peut tenir compte à la fois des données présentes sur le terminal (tel que les journaux d'appel ou de communication) ou de données accessibles à partir d'un réseau de communication, auquel cas la règle comprend une étape d'interrogation d'un ou plusieurs serveur de communication, via le module de communication COM (figure 1) du terminal.

Pour le module d'évolutivité des données de contact MED, les règles peuvent être évolutives dans le temps : par exemple, compléter des évènements associés à un contact en reprenant une règle initiale pondérée par une distance : "si le nouvel évènement trouvé est distant de plus de X jours de la rencontre initiale ou distant de plus de Y jours de la dernière communication que l'on eu avec ce contact alors il faut ignorer cet évènement" ou encore "arrêter de maintenir la liste des évènements pour ce contact s'il n'y a pas de nouvelle rencontre physique" (avec lui ce qui revient à supprimer la règle de la base de règles, pour ce contact en tout cas).

Pour le module de gestion des degrés d'utilisation et des degrés de d'affinité MGD, les règles peuvent également être évolutives dans le temps : par exemple, une personne pour laquelle j'ai une forte affinité d'utilisation parce que je dialogue souvent avec elle par courrier électronique, verra cette affinité décroître si ses courriers électroniques (ou les réponses de l'utilisateur à ses courriers électroniques) deviennent plus rares.

La règle permettant de faire évoluer la valeur de cette « affinité » pourra tout simplement disparaître des règles associées à ce contact dans la base de règles si aucun courrier électronique n'a été échangé pendant une durée donnée ou avoir des conditions plus sévères (pour passer d'un état initial à un état suivant il faut non plus deux courriers électroniques consécutifs en moins d'une semaine mais cinq courriers électroniques consécutifs en moins d'une semaine).

A titre d'exemple, on peut disposer des règles suivantes :
- une règle qui définit qu'il faut continuer à proposer à l'utilisateur les informations et/ou évènements relatifs à tous les contacts que l'utilisateur à rencontré pendant un période temporelle donnée (par exemple un certain nombre de mois de l'année) ;
- une règle qui définit que pour les autres contacts, il n'est pas nécessaire de rechercher les informations et/ou évènements les concernant (ou concernant la rencontre) un nombre de jours prédéfinis après que cette rencontre a eu lieu.
- une règle qui définit que, lorsque le degré d'affinité atteint un certain niveau, le module de collecte des représentations visuelles des contacts recherche et ajoute de nouvelles représentations au contact.

Pour l'entretien des degrés d'utilisation et des degrés d'affinités, on peut par exemple disposer des règles suivantes :
- une règle qui définit que le degré d'utilisation d'un contact est mis à zéro si l'utilisateur n'a aucune communication téléphonique avec ce contact durant deux mois (en analysant par exemple les historiques d'appels ou d'échange de communication électronique du terminal) ;
- une règle qui définit que le degré d'affinité d'un contact augmentera progressivement à chaque fois que l'utilisateur recevra un courrier électronique de la part de ce contact.

Bien évidemment, l'homme du métier pourra adapter, modifier et étendre le nombre et le type de règle à implémenter en fonction des besoins. L'objet de l'invention n'étant en effet pas de définir des règles particulières, mais de proposer une solution permettant de réaliser un contrôle de l'évolutivité des contacts en modifiant au moins certaines des données de contact associées à des contacts de l'utilisateur.

### 5.3 Règles et base de données de règles

Comme cela a été présenté préalablement, le module d'évolutivité des données de contact MED et le module de gestion des degrés d'utilisation et des degrés de d'affinité MGD utilisent les services d'un moteur d'exécution de règles. Ce moteur d'exécution de règles recherche au sein d'une base de données de règles, les règles à exécuter pour mettre à jour les données de contact.

Les règles sont typées. Cela signifie qu'une règle destinée à être exécutée par un module en particulier. Par exemple, une règle de mise à jour des données de contact pour le module d'évolutivité des données de contact (MED) sera typée « 1 » tandis qu'une règle de gestion des degrés d'utilisation et des degrés de d'affinité sera typée « 2 ». Un tel typage permet de maîtriser l'exécution des règles et de les ordonnancer.

La base de données de règle peut contenir des règles prédéfinies, qui sont en quelque sorte livrées avec le terminal. Ces règles se basent sur les champs de données et les catégories prédéfinies par le fabricant ou le distributeur du terminal.

Dans un mode de réalisation spécifique de l'invention, l'utilisateur du terminal peut également créer et modifier ses propres règles. Il est ainsi plus aisé de s'adapter au comportement de l'utilisateur. En effet, l'une des difficultés constatée par les inventeurs est que les règles prédéfinies permettent de faire évoluer les données prédéfinies mais pas les nouvelles données, insérées dans des nouveaux champs de données de l'utilisateur. Pour pallier cette difficulté, il est proposé à l'utilisateur de créer ses propres règles de mise à jour, par exemple en lien avec les actions réalisées le plus fréquemment par l'utilisateur.

Ainsi, par exemple, si l'on suppose que l'utilisateur utilise fréquemment une application de messagerie instantanée, qui n'était pas initialement installée sur son terminal pour communiquer avec l'un de ses contacts. Comme cette application n'était pas installée, il n'existe pas de règles concernant cette application. Cependant, cette application utilise les données de contact du terminal pour communiquer avec les contacts avec lesquels l'utilisateur souhaite entrer en relation et le sous-module de détection DET détecte l'accès et l'utilisation de ces données de contact (par exemple l'accès à l'adresse de messagerie instantanée).

Dans un mode de réalisation spécifique de l'invention, le procédé de création de règles propres à l'utilisateur comprend :
- une étape de détection d'un accès à une donnée de contact d'un contact au sein du carnet du terminal ;
- une étape d'incrémentation, au sein d'un structure de donnée de surveillance d'utilisation, d'une valeur d'utilisation de ladite donnée de contact pour ledit contact ;
- une étape de transmission d'une requête à l'utilisateur du terminal T sous la forme d'un message qui s'affiche sur l'écran MA (figure 1) du terminal lorsque la valeur d'utilisation de ladite donnée de contact pour ledit contact excède un plafond préalablement déterminé. Cette requête comprend un message du type « souhaitez vous créer un règle de mise à jour de l'affinité avec le contact lorsque vous utilisez l'application de messagerie instantanée » ;
- une étape de création de la règle dans la base de règle si l'utilisateur accepte la proposition de création de règle.

Ainsi, l'utilisateur se voit proposer régulièrement, en fonction de l'utilisation qu'il fait de son terminal, de nouvelles règles qui vont permettre, lorsqu'elles seront utilisées, de refléter l'affinité de l'utilisateur avec ces contacts en fonction de ses propres habitudes.

## Revendications

1. Procédé de traitement de données relatives à un contact d'un utilisateur d'un terminal (T), comprenant une étape (E10; E110; E210) de mémorisation desdites données dans ledit terminal sous la forme d'un groupe de données associé respectivement à une information identifiant ledit contact, ledit procédé étant **caractérisé en ce qu'**il comprend, au niveau du terminal, les étapes suivantes :
- détection (E11; E111; E211) de l'étape de mémorisation,
- déclenchement (E12; E112; E212) d'une recherche, auprès d'un module applicatif (AG1, CAL, TA; A1, A2) présent dans le terminal, d'informations complémentaires desdites informations de contact mémorisées,
- dans le cas où de telles informations complémentaires sont obtenues, commande (E17; E118A; E218A) de l'ajout de ces dernières aux informations de contact mémorisées, en association avec un nouveau groupe de données.

2. Procédé de traitement de données selon la revendication 1, ladite étape de recherche consiste à identifier (E13), puis extraire (E14) des informations relatives à un événement temporel associé au contact dont les données ont été mémorisées.

3. Procédé de traitement de données selon la revendication 2, selon lequel lorsque les informations relatives à un même événement temporel sont identifiées de façon récurrente, lesdites informations sont ajoutées aux informations de contact mémorisées, en tant que catégorie du contact.

4. Procédé de traitement de données selon la revendication 1, selon lequel ladite étape de recherche consiste à récupérer (E115, E116; E215, E216) en temps réel des informations se rapportant à un groupe de données de contact préalablement identifié parmi les données de contact mémorisées.

5. Procédé de traitement de données selon l'une quelconque des revendications 1 à 4, comprenant en outre les étapes suivantes :
- identification (E13), parmi les informations complémentaires obtenues, d'informations relatives à un autre contact que celui dont les données ont été mémorisées,
- déclenchement (E18) de l'émission d'une requête en mémorisation, auprès du terminal, des informations relatives audit autre contact,
- dans le cas où la requête en mémorisation est acceptée, mémorisation (E19A) des informations relatives audit autre contact dans le terminal (T).

6. Procédé de traitement de données selon la revendication 5, selon lequel lorsque, au cours de ladite étape d'identification (E13), des informations relatives à un événement temporel sont également identifiées parmi les informations complémentaires et sont associées à la fois au contact dont les données ont été mémorisées et audit autre contact, ladite étape de mémorisation consiste dans le déclenchement (E19'A) de l'ajout desdites informations d'événement temporel aux informations relatives audit autre contact.

7. Terminal (T) comprenant :
- un module (MT) de traitement de données relatives à un contact d'un utilisateur d'un terminal,
- un module (REP) de mémorisation apte à enregistrer lesdites données sous la forme d'une pluralité de groupes de données associés respectivement à une pluralité d'informations identifiant ledit contact,
le terminal étant **caractérisé en ce que** le module de traitement de données de contact comprend :
- des moyens (DET) de détection de l'enregistrement desdites données de contact,
- des moyens (REC) de recherche, auprès d'un module applicatif (AG1, CAL, TA; A1, A2) présent dans le terminal, d'informations complémentaires desdites informations de contact enregistrées,
- des moyens (AG2) d'agrégation aptes à être déclenchés dans le cas où de telles informations complémentaires sont obtenues, de façon à ajouter ces dernières aux informations de contact enregistrées, en association avec un nouveau groupe de données.

8. Terminal selon la revendication 7, dans lequel le module de traitement de données de contact comprend des moyens (ID) d'identification et des moyens (EXT) d'extraction d'informations relatives à un événement temporel associé au contact dont les données ont été enregistrées.

9. Terminal selon la revendication 8, dans lequel lorsque les informations relatives à un même événement temporel sont identifiées de façon récurrente, lesdits moyens (AG2) d'agrégation sont déclenchés de façon à ajouter aux informations de contact enregistrées, lesdites informations d'événement temporel en tant que catégorie (CAT) du contact.

10. Terminal selon la revendication 8, dans lequel le module de traitement de données comprend des moyens (RI) de récupération en temps réel d'informations se rapportant à un groupe de données de contact préalablement identifié parmi les données de contact enregistrées.

11. Terminal selon l'une quelconque des revendications 8 à 10, dans lequel les moyens (ID) d'identification sont aptes à identifier en outre, parmi les informations complémentaires, des informations qui sont relatives à un événement temporel auquel sont associés à la fois le contact dont les données ont été enregistrées et un autre contact, ledit module d'agrégation étant alors apte à être déclenché pour ajouter lesdites informations d'événement temporel aux informations relatives audit autre contact.

12. Programme d'ordinateur comportant des instructions pour l'exécution des étapes du procédé de traitement de données de contact selon l'une quelconque des revendications 1 à 7, lorsque ledit programme est exécuté par un ordinateur.

13. Procédé de mise à jour de données relatives à un contact d'un utilisateur d'un terminal (T), lesdites données ayant préalablement fait l'objet d'un traitement selon un procédé de traitement de données tel que décrit selon l'une des revendications 1 à 6,
ledit procédé de mise à jour étant **caractérisé en ce qu'**il comprend, au niveau du terminal, les étapes suivantes :
- identification, au sein d'une base de données de règles, d'au moins une règle de mise à jour d'une donnée relative audit contact ;
- exécution de ladite règle de mise à jour de ladite donnée délivrant une valeur ;
- mise à jour de ladite donnée relative audit contact par ladite valeur ;

14. Dispositif de mise à jour de données relatives à un contact d'un utilisateur d'un terminal (T), lesdites données ayant préalablement fait l'objet d'un traitement dans un terminal tel que décrit selon l'une des revendications 7 à 11,
ledit dispositif de mise à jour étant **caractérisé en ce qu'**il comprend :
- des moyens d'identification, au sein d'une base de données de règles, d'au moins une règle de mise à jour d'une donnée relative audit contact ;
- des moyens d'exécution de ladite règle de mise à jour de ladite donnée délivrant une valeur ;
- des moyens de mise à jour de ladite donnée relative audit contact par ladite valeur.
